Europäisches Patentamt

(19) European Patent Office

Office européen des brevets

(11) Numéro de publication : **0 306 373 B1**

(12) **FASCICULE DE BREVET EUROPEEN**

(45) Date de publication du fascicule du brevet :
06.03.91 Bulletin 91/10

(51) Int. Cl.⁵ : **B60T 1/06, B62L 1/00,**
**F16D 55/228**

(21) Numéro de dépôt : 88402019.9

(22) Date de dépôt : 03.08.88

(54) **Dispositif de support et de liaison pour étrier de frein à disques.**

(30) Priorité : 21.08.87 FR 8711799

(43) Date de publication de la demande :
08.03.89 Bulletin 89/10

(45) Mention de la délivrance du brevet :
06.03.91 Bulletin 91/10

(84) Etats contractants désignés :
DE ES GB IT NL

(56) Documents cités :
DE-A- 2 026 991
GB-A- 2 160 937
US-A- 3 194 350

(73) Titulaire : **ELF FRANCE, Société Anonyme dite:**
**Tour Elf 2 place de la Coupole La Défense 6**
**F-92400 Courbevoie (FR)**

(72) Inventeur : **Trema, Daniel**
**31 rue du 15 Février**
**F-95870 Bezons (FR)**

(74) Mandataire : **Hirsch, Marc-Roger**
**Cabinet Hirsch 34 rue de Bassano**
**F-75008 Paris (FR)**

**Description**

La présente invention se rapporte à un dispositif de support et de liaison à des parties non tournantes d'au moins un étrier de frein à disque destiné à coopérer avec un disque de frein. Un tel dispositif est décrit, p.ex., dans GB-A-2160937.

L'application des freins à disques se heurte actuellement à diverses difficultés d'implantation : d'une part, des disques à l'intérieur de l'espace laissé libre autour du moyeu de la roue, ce qui limite les diamètres extérieur et intérieur du disque et, d'autre part, des étriers de serrage de ces disques sur les garnitures de friction, car les parties non tournantes de support de la roue et aptes à constituer un organe de réaction au couple de freinage sont souvent situées à distance de l'espace laissé libre pour le disque. Ces difficultés sont encore aggravées par l'obligation où l'on se trouve de monter deux disques de freinage par roue sur les véhicules rapides ou lourds lorsque les performances thermiques d'un disque unique sont insuffisantes. Le problème est encore compliqué dans les motocycles du fait que la roue avant supporte la plus grande part du freinage et qu'il importe, pour la stabilité du véhicule au cours du freinage, que le couple de freinage soit appliqué le plus près possible du plan moyen de la roue.

Une solution a été proposée qui utilise une pièce support d'étrier montée rotative autour de l'axe de roue et retenue tangentiellement en rotation par une biellette de réaction. Une telle solution se révèle onéreuse et difficile à mettre en oeuvre lorsque l'on doit disposer de deux disques de frein sur la même roue. Les difficultés techniques sont encore accrues quand il est nécessaire d'équiper une roue portée par un bras unique de suspension de roue, car la roue vient entourer ce bras unique, ce qui réduit le diamètre du ou des disques de frein, tandis que l'intervalle important entre le bras de suspension unique et les disques est mal adapté pour relier les étriers de frein au bras unique.

L'un des buts de la présente invention est précisément de pallier ces inconvénients et de permettre de réaliser des freins de roue à deux disques très compacts et dans lesquels les étriers sont reliés de façon peu encombrante au bras unique de suspension de roue.

A cet effet, selon l'invention le dispositif de support et de liaison à des parties non tournantes d'au moins un étrier de frein comporte une pièce de liaison en forme générale d'arc, située au-delà de la périphérie du disque et dont au moins une partie de la section transversale est en forme de U à deux branches dont l'une des branche constitue la section d'une plaque fixée sur un organe de réaction au couple de freinage, tel qu'un bras unique de suspension de roue, tandis que l'autre branche constitue la section d'au moins une languette fixée de part et d'autre à un étrier de frein chevauchant un disque de frein dont le plan moyen se confond sensiblement avec celui de ladite languette. Les deux bras uniques du U présentent généralement des longueurs inégales, le bras le plus long étant celui correspondant à la coupe transversale de la plaque.

Selon un autre mode de réalisation du dispositif de support selon l'invention, celui-ci comporte deux languettes situées au voisinage des extrémités de la pièce de liaison et séparées par un intervalle central permettant l'introduction des garnitures de frein. L'étrier de frein est généralement constitué de deux parties assemblées sur la ou les languettes et, le cas échéant, sur elles-mêmes en insérant le disque de frein placé dans le prolongement de la ou les languettes. L'étrier de frein est assemblé sur la ou les languettes à l'aide de vis traversant des trous d'assemblage ménagés dans ces languettes.

Selon un autre mode de réalisation de l'étrier de frein en relation avec le dispositif de support, l'étrier de frein comporte une première partie d'étrier chevauchant un premier disque de frein situé sensiblement dans le prolongement de la ou les languettes et une deuxième partie d'étrier chevauchant un deuxième disque de frein dont la partie active est disposée en face de la plaque dans un plan moyen situé entre celui de la plaque et celui des languettes.

Selon encore un autre mode de réalisation du dispositif de support selon l'invention, la pièce de liaison comporte un prolongement latéral dont le plan moyen est décalé par rapport à celui de la plaque de fixation, du côté opposé à celui des languettes et qui est muni de trous de fixation d'un autre étrier de frein coopérant avec un autre disque de frein disposé à proximité de la plaque dans un plan moyen situé entre celui de la plaque et celui des languettes.

La pièce de liaison en forme générale d'arc peut être réalisée monobloc avec l'organe de réaction au couple de freinage, tel qu'un bras unique de suspension de roue, dans lequel la plaque s'intègre.

Selon un autre mode de réalisation de l'invention, la plaque de fixation sur l'organe de réaction au couple de freinage présente la forme d'un secteur aplati, de forme générale triangulaire, muni de trous de fixation au voisinage de chacune des extrémités du triangle et une épaisseur plus importante que celle de la ou des languettes.

Le frein de roue à deux disques, en particulier pour une roue avant de motocycle, utilisant un dispositif de support et de liaison d'étrier selon l'invention, comporte deux disques de frein engagés par des cannelures intérieures sur des cannelures extérieures d'un tambour cylindrique relié au moins en rotation à la roue à freiner, ces disques flottant axialement et étant maintenus en position axiale sur les cannelures du tambour par la butée des garnitures de friction des étriers. Les cannelures du tambour sont disposées sur le trajet de la projection de la pièce de liaison sur l'axe de rotation de la roue.

D'autres buts, avantages et caractéristiques apparaîtront à la lecture de la description d'un mode de réalisation de l'invention, faite à titre non limitatif et en regard du dessin annexé, où :

- la figure 1 représente en élévation frontale et en coupe par l'axe du moyeu de roue (plan I-I de la figure 4), un train avant de motocycle utilisant le dispositif de support et de liaison pour étrier de frein à disque selon l'invention, ainsi que le frein à deux disques réalisé avec un tel support ;

- la figure 2 est une vue de côté de la pièce de liaison en forme d'arc permettant de réaliser le dispositif selon l'invention, les disques de frein coopérants étant figurés avec arrachements ;

- la figure 3 est une vue de dessus avec arrachements partiels, correspondant à la vue de côté de la figure 2 et représentant la pièce de liaison montée sur un organe de réaction au couple de freinage et équipée d'étriers de frein chevauchant des disques de frein ;

- la figure 4 est une vue du côté opposé à celui de la figure 2 de la pièce de liaison en forme d'arc.

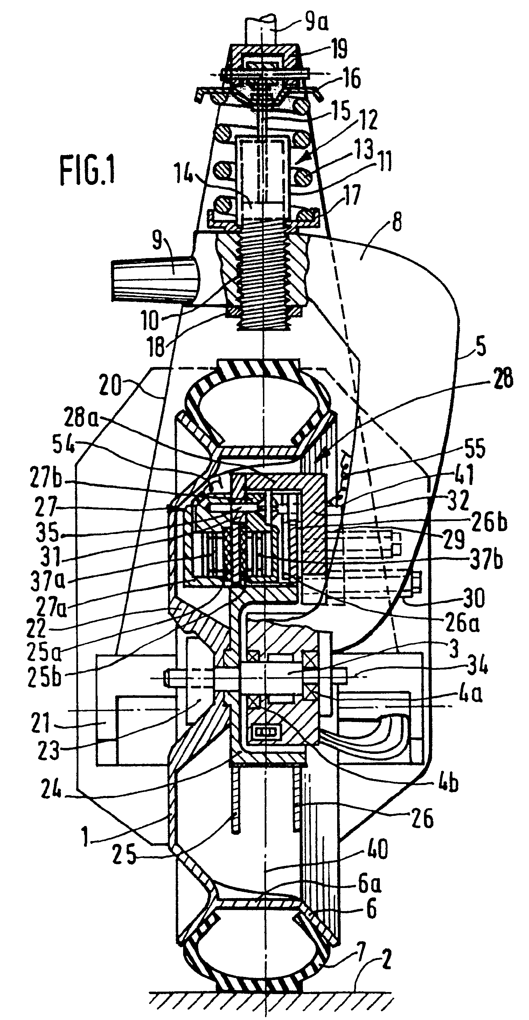

Si l'on se reporte à la figure 1, on voit de face le train avant d'un motocycle, constitué d'une roue avant 1 qui roule sur un chemin de roulement 2 en tournant avec son axe 3 monté sur des roulements à bille 4a et 4b portés par un bras de suspension unique ou jambe de force 5. Le bras unique 5 présente une partie coudée en forme de C qui enveloppe la section de la roue 1 constituée d'une jante 6 à fond 6a et d'un bandage pneumatique 7. La partie supérieure 8 du bras unique 5 présente un ergot 9 de bras de liaison à un guidon de direction 9a et un alésage fileté 10 recevant le corps 11 d'un combiné ressort-amortisseur 12 comportant un ressort externe 13 et un piston intérieur d'amortissement 14, mobile dans un alésage du corps et dont la tige 15 est reliée à une plaque supérieure 16 d'appui du ressort 13. L'appui inférieur du ressort 13 est constitué par une coupelle 17 vissée sur le corps 11 pour le maintenir en position sur la partie supérieure 8 du bras unique, en coopération avec un anneau inférieur vissé de blocage 18. La plaque supérieure d'appui 16 est reliée par tout moyen adéquat au bec avant 19 du châssis 20 du motocycle supportant le bloc moteur-transmission 21 et également le poids du conducteur du motocycle.

Le moyeu 22 de la roue 1 est serré par une vis 23 sur l'axe 3 et est rendu solidaire en rotation d'un tambour 24 de support de disque de frein. Le tambour 24 et muni à sa périphérie de cannelures sur lesquelles glissent axialement les cannelures conjuguées de deux disques de frein 25 et 26 qui sont, en fait, maintenus axialement en position par le contact avec les garnitures de friction respectives 25a et 25b et 26a et 26b avec lesquelles leurs pistes de friction coopèrent.

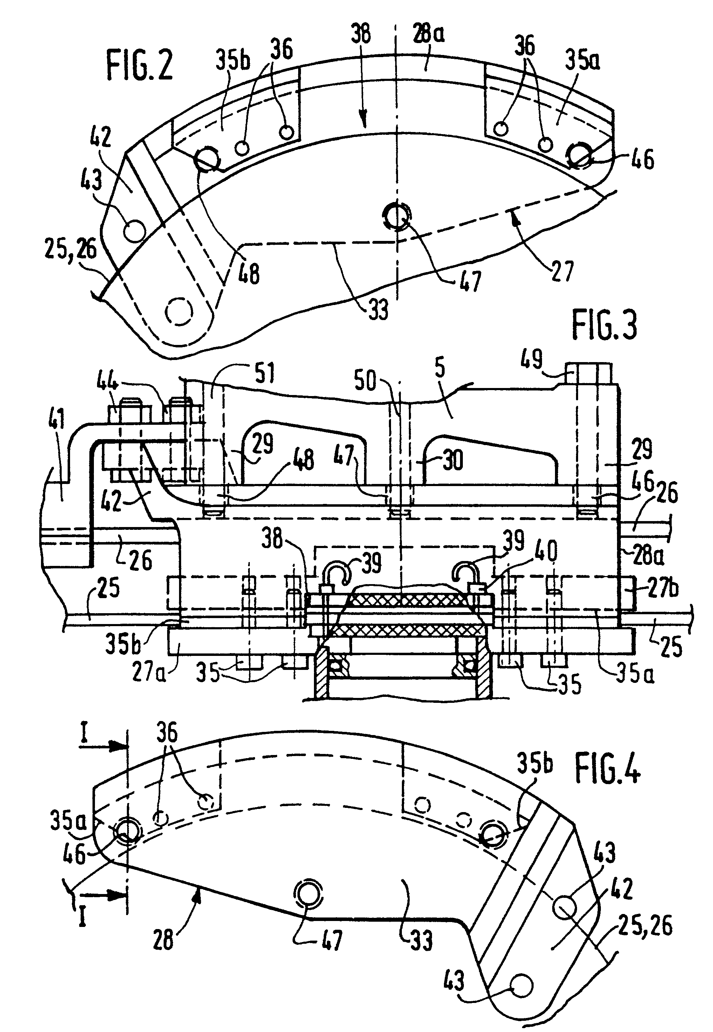

Les garnitures de friction du disque 25 sont portées par un étrier de frein à disque 27 fixé sur une pièce intermédiaire ou de liaison 28, elle-même fixée sur des bossages 29, 30 du bras 5. La pièce de liaison 28 présente latéralement la forme générale d'un arc (voir les figures 2 et 4) et en coupe transversale, telle que représentée à la figure 1, la forme d'un U à deux branches 31 et 32 de longueur et d'épaisseur inégales et reliées par une barre épaisse 28a. La branche 32 est la coupe d'une plaque 33 fixée directement sur le bras 5 et présente la plus grand épaisseur et la plus grand longueur assurant une bonne rigidité de fixation. La branche 31 qui présente une plus faible épaisseur est portée par la barre 28a en forme de partie de tube et fait saillie sur une faible longueur en direction de l'axe 34 de la roue. Cette branche 31 se présente en fait sous la forme de deux languettes 35a et 35b.

L'étrier de frein 27 est réalisé en deux moitiés 27a et 27b assemblées par des vis 35 qui traversent des trous 36 ménagés dans les languettes 35a et 35b. Chacune des moitiés de l'étrier 27 comporte un piston de frein 37a et, respectivement 37b, mobile dans un alésage et soumis au cours du freinage à une pression hydraulique pour repousser les garnitures de friction 25a et 25b au contact des pistes de friction du disque 25. Les languettes 35a et 35b sont placées au voisinage des extrémités de la pièce de liaison 27, de manière à laisser, entre elles, un intervalle central 38 (voir les figures 2 et 3) qui permet d'introduire les garnitures de friction 25a et 25b en position de service à partir du haut, après démontage de la roue 1. Les garnitures de friction maintenues en position par gravité sont, de plus, emprisonnées par des épingles 39 qui traversent des trous ménagés dans les bossages respectifs 40 de la pièce de liaison 28 et de la moitié d'étrier extérieur 27a.

Le plan médian du disque de frein 25 est placé sensiblement dans le plan médian des languettes 35a et 35b, et sensiblement symétrique du disque 26 par rapport au plan moyen du bandage pneumatique 7 de la roue 1. Le disque de frein 26, qui constitue un deuxième disque de frein situé du côté opposé au voile de la roue 1, coopère avec un deuxième étrier de frein à disque 41. Dans le mode de réalisation représenté à la figure 1, le deuxième étrier de frein 41 qui porte les garnitures de friction 26a et 26b, est assemblé et fixé à un prolongement 42 de la pièce de liaison 28, situé du côté de la languette 35b. Ce prolongement 42 est décalé par rapport au plan de la plaque de fixation 33 pour tenir compte du plan décalé du disque 26 coopérant avec l'étrier 41 (voir la figure 3) et il présente deux trous de fixation 43 destinés à recevoir deux boulons 44 de fixation de l'étrier 41. La plaque 33 présente la forme générale d'un secteur aplati ou d'un triangle et, au voisinage de chacune des extrémités de ce triangle, sont prévus des trous de fixation filetés 46, 47, 48 dans lesquels viennent s'engager des vis de fixation correspondantes 49, 50, 51 qui traversent les bossages respectifs 29, 30 ménagés sur le bras unique 5.

Diverses variantes de réalisation des étriers de frein et de leur fixation selon l'invention sont possibles. Selon l'un de ces variantes, l'étrier de frein 27 réalisé en deux parties constitue, après assemblage, un bloc avec l'étrier 41, les moitiés d'étrier double étant, par exemple, en forme de ⌐⌐ pour tenir compte du décalage axial entre les deux disques. Selon une autre variante de fixation, la pièce intermédiaire ou de liaison 28 qui était un monobloc résistant, constitue un monobloc également avec le bras unique 5, venant par exemple de fonderie. Dans ce mode de réalisation, la plaque 33 peut disparaître ou être intégrée au bras unique 5, les seules parties en saillie de la pièce de liaison 28 étant alors constituées par la barre 28a en forme de partie de tube contournant les disques et la moitié 27a de l'étrier 27, et par les languettes 35a et 35b.

Le montage et le mode de fonctionnement du dispositif de support d'étrier de frein à disque selon l'invention et qui vient d'être décrit va maintenant être explicité.

La pièce de liaison 28 est équipée de ses deux étriers de frein 27 et 41 avec leurs garnitures de friction reculées au maximum (en position de desserrage total). La roue 1 étant enlevée, la pièce 28 est alors glissée parallèlement aux pistes de friction des disques, de telle manière que les extrémités libres des disques de frein 25 et 26 s'introduisent dans les fentes de serrage des étriers correspondants 27 et 41 avec des garnitures de friction de part et d'autre. La pièce de liaison 28 étant positionnée sur les bossages 29, 30, il suffit, pour réaliser le montage, de visser les vis 49, 50 et 51 dans les alésages filetés correspondants 46, 47, 48 de la plaque 33. L'équipement du frein se termine par le raccordement des conduites hydrauliques de freinage 54 et 55 au maître-cylindre hydraulique avant. Une succession d'actionnements au maître-cylindre rapproche les garnitures de friction 25a, 25b, 26a, 26b des pistes de friction correspondantes et finalement applique ces garnitures sur les pistes, le frein étant prêt à fonctionner. On peut alors remonter la roue 1 qui entoure la pièce de liaison 28 à faible distance de la périphérie de celle-ci et le train avant/frein est prêt à fonctionner avec deux disques de frein.

Au cours du freinage, les efforts tangentiels exercés par les disques sur les étriers de frein 27 et 41 sont reportés respectivement sur les languettes 35a et 35b et sur le prolongement 42, d'où ils sont reportés sur les bossages 29, 30 et sur le bras 5. La pièce de liaison 28 qui présente une forme ouverte se comporte partiellement comme un radiateur pour les étriers de frein et les protège en service d'un échauffement excessif susceptible de provoquer une ébullition dangereuse de l'huile de frein.

## Revendications

1. Dispositif de support et de liaison à des parties non tournantes d'au moins un étrier de frein destiné à coopérer avec un disque de frein, caractérisé en ce qu'il comporte une pièce de liaison (28) en forme générale d'arc, située au-delà de la périphérie du disque (25) et dont au moins une partie de la section transversale est en forme de U à deux branches dont l'une (32) des branches constitue la section d'une plaque (33) fixée sur un organe de réaction au couple de freinage, tel qu'un bras unique (5) de suspension de roue (1), tandis que l'autre branche (31) constitue la section d'au moins une languette (35a, 35b) fixée de part et d'autre à un étrier de frein (27) chevauchant un disque de frein (25) dont le plan moyen se confond sensiblement avec celui de ladite languette.

2. Dispositif selon la revendication 1, caractérisé en ce que les deux branches (31, 32) du U présentent des longueurs inégales, le bras le plus long étant celui correspondant à la coupe transversale de la plaque (33).

3. Dispositif selon l'une des revendications 1 ou 2, caractérisé en en ce qu'il comporte deux languettes (35a, 35b) situées au voisinage des extrémités de l'arc de la pièce de liaison (28) et séparées par un intervalle central (38) permettant l'introduction des garnitures de frein (25a, 25b) de l'étrier de frein (27).

4. Dispositif selon l'une des revendications 1 à 3, caractérisé en ce que l'étrier de frein (27) est constitué de deux parties (27a, 27b) assemblées sur la ou les languettes et, le cas échéant, sur elles-mêmes en enserrant le disque de frein (25) placé dans le prolongement de la ou les languettes (35a, 35b).

5. Dispositif selon l'une des revendications 1 à 4, caractérisé en ce que l'étrier de frein (27) est assemblé sur la ou les languettes (35a, 35b) à l'aide de vis (35) traversant des trous d'assemblage (36) ménagés dans ces languettes.

6. Dispositif selon l'une des revendications 1 à 5, caractérisé en ce que l'étrier de frein comporte une première partie d'étrier (27) chevauchant un premier disque de frein (25) situé sensiblement dans le prolongement de la ou les languettes (35a, 35b) et une deuxième partie d'étrier (41) chevauchant un deuxième disque de frein (26) dont la partie active est disposée en face de la plaque (33) dans un plan moyen situé entre celui de la plaque (33) et celui des languettes.

7. Dispositif selon l'une des revendications 1 à 6, caractérisé en ce que la pièce de liaison (28) comporte un prolongement latéral (42) dont le plan moyen est décalé par rapport à celui de la plaque de fixation (33), du côté opposé à celui de la ou les languettes (35a, 35b) et qui est muni de trous de fixation (43) d'un autre étrier de frein (41) coopérant avec un autre disque de frein (26) disposé à proximité de la plaque (33) dans un plan moyen situé entre celui de la plaque (33) et celui des languettes.

8. Dispositif selon l'une des revendications 1 à 7, caractérisé en ce que la pièce de liaison (28) est réalisée monobloc avec l'organe de réaction au couple de freinage, tel qu'un bras unique (5) de suspension de roue, dans lequel la plaque (33) s'intègre.

9. Dispositif selon l'une des revendications 1 à 7, caractérisé en ce que la plaque de fixation (33) sur l'organe de réaction au couple de freinage (5) présente la forme générale d'un secteur aplati, de forme générale triangulaire, muni de trous de fixation (46, 47, 48) au voisinage de chacune des extrémités du triangle et une épaisseur plus importante que celle de la ou les languettes (35a, 35b).

10. Frein de roue à deux disques, en particulier pour une roue avant de motocycle, utilisant un dispositif de support et de liaison d'étrier selon l'une des revendications 1 à 9, caractérisé en ce qu'il comporte deux disques de frein (25, 26) engagés par des cannelures intérieures sur les cannelures extérieures d'un tambour cylindrique (24) relié au moins en rotation à la roue à freiner, ces disques flottant axialement et étant maintenus en position axiale sur les cannelures du tambour par la butée des garnitures de friction des étriers de frein (27, 41) et en ce que les cannelures du tambour (24) sont disposées sur le trajet de la projection de la pièce de liaison (28) sur l'axe de rotation (34) de la roue (1).

## Ansprüche

1. Vorrichtung zum Halten wenigstens eines mit einer Bremsscheibe zusammenwirkenden Bremssattels und zum Verbinden desselben mit nicht umlaufenden Teilen, dadurch gekennzeichnet, dass sie ein wesentlich bogenförmiges Verbindungsteil (28) umfasst, das am Umfang der Bremsscheibe (25) angeordnet ist und dessen Querschnitt wenigstens teilweise ein zweischenkliges U-förmiges Profil darstellt, wobei einer der Schenkel (32) den Querschnitt einer an einem das Bremsmoment aufnehmenden Organ, wie einseitig angeordneter einziger Radaufhängungsarm (5) befestigten Platte (33) bildet, während der andere U-Schenkel (31) den Querschnitt wenigstens einer beiderseits an dem die Bremsscheibe (25) übergreifenden Bremssattel (27) befestigten Zunge (35a, 35b) bildet, wobei die Mittelebene der Bremsscheibe wesentlich mit derjenigen der Zunge zusammenfällt.

2. Vorrichtung nach Anspruch 1, dadurch gekennzeichnet, dass die beiden U-Schenkel (31, 32) ungleich lang sind, wobei der längere Schenkel der dem Querschnitt der Platte (33) entsprechende Schenkel ist.

3. Vorrichtung nach Anspruch 1 oder 2, dadurch gekennzeichnet, dass sie zwei in Nähe der Enden des durch das Verbindungsteil (28) gebildeten Bogens angeordnete und durch einen mittleren Zwischenraum (38) getrennte Zungen (35a, 35b) aufweist, die das Einsetzen der Bremsbeläge (25a, 25b) des Bremssattels (27) gestatten.

4. Vorrichtung nach einem der Ansprüche 1 bis 3, dadurch gekennzeichnet, dass der Bremssattel (27) aus zwei an der Zunge bzw. an den Zungen angebrachten Teilen (27a, 27b) besteht, die ggf. auch miteinander verbunden sein können und die die in der Verlängerung der Zunge bzw. der Zungen (35a, 35b) angeordnete Bremsscheibe (25) umgreifen.

5. Vorrichtung nach einem der Ansprüche 1 bis 4, dadurch gekennzeichnet, dass der Bremssattel (27) an der Zunge bzw. an den Zungen (35a, 35b) vermittels mehrerer in den Zungen vorgesehene Schraubenbohrungen durchquerender Schrauben (35) befestigt ist.

6. Vorrichtung nach einem der Ansprüche 1 bis 5, dadurch gekennzeichnet, dass der Bremssattel einen ersten Sattel teil (27) aufweist, der eine erste in der Verlängerung der Zunge bzw. der Zungen (35a, 35b) angeordnete Bremsscheibe (25) umgreift, sowie einen zweiten Bremssattel (41), der eine zweite Bremsscheibe (26) umgreift, deren Wirkabschnitt gegenüber der Platte (33) in einer Mittelebene angeordnet ist, welche zwischen der Mittelebene der Platte (33) und derjenigen der Zunge liegt.

7. Vorrichtung nach einem der Ansprüche 1 bis 6, dadurch gekennzeichnet, dass das Verbindungsteil (28) eine seitliche Verlängerung (42) aufweist, deren Mittelebene in bezug auf diejenige der Befestigungsplatte (33) versetzt ist, und zwar auf der der Mittelebene der Zunge bzw. der Zungen (35a, 35b) entgegengesetzten Seite, wobei diese Verlängerung Befestigungslöcher (43) für einen anderen Bremssattel (41), welcher mit einer anderen Bremsscheibe (26) zusammenarbeitet aufweist, die in Nähe der Platte (33) in einer Mittelebene, welche zwischen der Mittelebene der Platte (33) und derjenigen der Zungen liegt, angeordnet ist.

8. Vorrichtung nach einem der Ansprüche 1 bis 7, dadurch gekennzeichnet, dass das Verbindungsteil (28) mit dem das Bremsmoment aufnehmenden Teil, wie einseitig angeordneter einziger Radaufhängungsarm (5), einstückig ausgebildet ist, welchem die Platte (33) einverleibt ist.

9. Vorrichtung nach einem der Ansprüche 1 bis 7, dadurch gekennzeichnet, dass die Befestigungsplatte (33) zur Befestigung an dem das Bremsmoment aufnehmenden Teil bzw. Organ (5) wesentlich die Form eines abgeflachten, wesentlich dreieckigen Sektors besitzt und Befestigungslöcher (46, 47, 48) in Nähe jeder Ecke des Dreiecks aufweist, wobei seine Dicke grösser ist, als diejenige der Zungen (35a, 35b).

10. Radbremse mit zwei Bremsscheiben, insbesondere für das Vorderrad eine Motorfahrrads, mit einer Halte- und Verbindungsvorrichtung für Bremssattel nach einem der Ansprüche 1 bis 9, dadurch gekennzeichnet, dass sie zwei mit Innennuten auf die Aussennuten einer Zylindertrommel (24) aufgekeilte Bremsscheiben (25, 26) aufweist, welch letztere wenigstens drehfest mit dem zu bremsenden Rad verbunden ist, wobei die Bremsscheiben axial schwimmend angeordnet und axial in den Nuten der Trommel durch Anschlag der Reibungsbeläge der Bremssättel (27, 41) festgelegt sind, und dass die Nuten der Trommel (24) auf der Laufbahn der Projektion des Verbindungsteils (28) auf die Drehachse (34) des Rades (1) angeordnet sind.

## Claims

1. Device for supporting and attaching to non-rotating parts at least one brake caliper or yoke intended to cooperate with a brake disk, characterized in that it includes an attaching piece (28) having a generally arcuate shape, situated beyond the periphery of the disk (25) and of which at least one part of its cross section is U-shaped with two legs one (32) of which legs constitutes the section of a plate (33) secured onto a braking torque opposing reaction member, such as a wheel (1) single suspension arm (5), while the other leg (31) constitutes the section of at least one tab (35a, 35b) secured on either side to a brake caliper (27) straddling a brake disk (27) of which the mean plane substantially coincides with that of the said tab.

2. Device according to claim 1, characterized in that the two legs (31, 32) of the U-shape have unequal lengths, the longer arm being that corresponding to the transverse cross-section of the plate (33).

3. Device according to one of claims 1 or 2, characterized in that it comprises two tabs (35a, 35b) located adjacent to the ends of the arc of the attaching piece (28) and separated by a central gap (38) allowing the introduction of the brake linings (25a, 25b) of the brake caliper or yoke (27).

4. Device according to one of claims 1 to 3, characterized in that the brake caliper (27) is constituted by two parts (27a, 27b) assembled on the tab(s) and, where necessary, on themselves while surrounding the brake disk (25) placed in the prolongation of the tab(s) (35a, 35b).

5. Device according to one of claims 1 to 4, characterized in that the brake caliper (27) is assembled on the tab(s) (35a, 35b) by means of screws (35) passing through the assembly holes (36) provided in these tabs.

6. Device according to one of claims 1 to 5, characterized in that the brake caliper or yoke includes a first part (27) of the caliper straddling a first brake disk (25) situated substantially in the extension of the tab(s) (35a, 35b) and a second caliper part (41) straddling a second brake disk (26) the active part of which is disposed facing the plate (33) in a mean plane located between that of the plate (33) and that of the tabs.

7. Device according to one of claims 1 to 6, characterized in that the attaching piece (28) includes a lateral extension (42) of which the mean plane is offset with respect to that of the securing plate (33), on the side opposite that of the tab(s) (35a, 35b) and which is provided with holes (43) for securing another brake caliper (41) cooperating with another brake disk (26) disposed in the vicinity of the plate (33) in a mean plane located between that of the plate (33) and that of the tabs.

8. Device according to one of claims 1 to 7, characterized in that the attaching piece (28) is made integral with the braking torque reaction member, such as a wheel single suspension arm (5), in which the plate (33) is integrated.

9. Device according to one of claims 1 to 7, characterized in that the securing plate (33) on the braking torque reaction member (5) has the general form of a flattened sector, with a general triangular shape, provided with securing holes (46, 47, 48) adjacent to each of the ends of the triangle and having a greater thickness that of the tab(s) (35a, 35b).

10. Wheel brake having two disks, in particular for a motorcycle front wheel, using a device for supporting and attaching a caliper or yoke according to one of claims 1 to 9, characterized in that it includes two brake disks (25, 26) engaged by internal grooves on the external grooves of a cylindrical drum (24) connected at least in rotation to the wheel to be braked, these disks floating axially and being maintained in axial position onto the grooves of the drum by the abutment of the brake linings of the brake calipers (27, 41) and in that the grooves of the drum (24) are disposed on the path of projection of the attaching piece (28) onto the axis of rotation (34) of the wheel (1).

FIG.1

EP 0 306 373 B1

**FIG.2**

**FIG.3**

**FIG.4**